Europäisches Patentamt

European Patent Office

Office européen des brevets

(19)

(11) **EP 0 977 148 B1**

(12) **FASCICULE DE BREVET EUROPEEN**

(45) Date de publication et mention
de la délivrance du brevet:
**18.08.2004 Bulletin 2004/34**

(51) Int Cl.$^7$: **G06T 3/00**

(21) Numéro de dépôt: **99401881.0**

(22) Date de dépôt: **23.07.1999**

(54) **Dispositif électronique de recalage automatique d'images**

Elektronische Vorrichtung zur Bildausrichtung

Electronic apparatus for image registration

(84) Etats contractants désignés:
**BE DE ES GB IT NL**

(30) Priorité: **28.07.1998 FR 9809649**

(43) Date de publication de la demande:
**02.02.2000 Bulletin 2000/05**

(73) Titulaire: **INRIA INSTITUT NATIONAL DE RECHERCHE
EN INFORMATIQUE ET EN AUTOMATIQUE
Rocquencourt F-78153 Le Chesnay (FR)**

(72) Inventeurs:
• **Roche, Alexis
06560 Valbonne (FR)**
• **Ayache, Nicholas
06000 Nice (FR)**
• **Malandain, Grégoire
06600 Antibes (FR)**
• **Pennec, Xavier
06600 Antibes (FR)**

(74) Mandataire: **Plaçais, Jean-Yves et al
Cabinet Netter,
36, avenue Hoche
75008 Paris (FR)**

(56) Documents cités:
WO-A-97/41532          GB-A- 1 437 161

• BUZUG T M ET AL: "Voxel-based similarity measures for medical image registration in radiological diagnosis and image guided surgery" JOURNAL OF COMPUTING AND INFORMATION TECHNOLOGY - CIT, JUNE 1998, UNIV. COMPUT. CENTRE, ZAGREB, CROATIA, vol. 6, no. 2, pages 165-179, XP002099326 ISSN 1330-1136
• MORT M S ET AL: "Maximum likelihood image registration with subpixel accuracy" APPLICATIONS OF DIGITAL IMAGE PROCESSING XI, SAN DIEGO, CA, USA, 15-17 AUG. 1988, vol. 974, pages 38-45, XP002099327 ISSN 0277-786X, Proceedings of the SPIE - The International Society for Optical Engineering, 1988, USA
• VAN DEN ELSEN P A ET AL: "AUTOMATIC REGISTRATION OF CT AND MR BRAIN IMAGES USING CORRELATION OF GEOMETRICAL FEATURES" IEEE TRANSACTIONS ON MEDICAL IMAGING, vol. 14, no. 2, juin 1995 (1995-06), pages 384-396, XP000520949
• HERBIN M ET AL: "AUTOMATED REGISTRATION OF DISSIMILAR IMAGES: APPLICATION TO MEDICALIMAGERY" COMPUTER VISION GRAPHICS AND IMAGE PROCESSING, vol. 47, no. 1, 1 juillet 1989 (1989-07-01), pages 77-88, XP000086844
• WOODS R P ET AL: "MRI-PET REGISTRATION WITH AUTOMATED ALGORITHM" JOURNAL OF COMPUTER ASSISTED TOMOGRAPHY, vol. 17, no. 4, juillet 1993 (1993-07), pages 536-546, XP000613886
• VIOLA P ET AL: "ALIGNMENT BY MAXIMIZATION OF MUTUAL INFORMATION" INTERNATIONAL JOURNAL OF COMPUTER VISION, vol. 24, no. 2, septembre 1997 (1997-09), pages 137-154, XP000703579

- MAES F ET AL: "MULTIMODALITY IMAGE REGISTRATION BY MAXIMIZATION OF MUTUAL INFORMATION" IEEE TRANSACTIONS ON MEDICAL IMAGING, vol. 16, no. 2, avril 1997 (1997-04), pages 187-198, XP000685807

**Description**

L'invention concerne le domaine du traitement de couples d'images numériques comparables, "bidimensionnelles" (2D) ou "tridimensionnelles" (3D), et plus particulièrement le recalage d'une première image par rapport à une seconde image.

On entend par recalage, le fait de déterminer, à partir des jeux de données qui représentent les deux images numériques comparables, une transformation permettant de passer de l'une d'entre elles, dite image de "référence", à l'autre, dite image "flottante". En d'autres termes, il s'agit de superposer "au mieux" des structures contenues dans deux images comparables.

Ici, le mot "comparable" doit être compris dans son acceptation la plus large. Il qualifie donc, notamment, des images dites "monomodales" prises à l'aide d'une même technique d'acquisition, soit sur des régions sensiblement identiques d'un même "objet" à des instants différents, soit sur des régions sensiblement identiques de deux "objets" distincts. Mais il qualifie également des images dites "multimodales" prises à l'aide de deux techniques d'acquisition différentes, soit sur des régions sensiblement identiques d'un même "objet" à des instants éventuellement différents, soit sur des régions sensiblement identiques de deux "objets" distincts.

Un certain nombre de techniques de recalage sont déjà connues de l'homme du métier. C'est notamment le cas de certaines techniques dites "orientées voxel" dans lesquelles il s'agit de déterminer la transformation de recalage qui maximise une certaine mesure de similarité entre les voxels superposables de deux images comparables. Le voxel est le plus petit élément volumique (3D) ou surfacique (2D) d'une image. En général, on associe une donnée, du jeu de données d'une image, à chaque élément (ou voxel) composant cette image. Une donnée comprend au moins une composante de position permettant d'identifier l'élément correspondant et une composante d'intensité représentant la valeur en cette position d'une grandeur physique choisie.

De telles techniques orientées voxel font intervenir, par exemple, le critère de WOODS, ou le critère de VIOLA, ou encore l'information dite "mutuelle". Ces techniques n'apportent pas une entière satisfaction, notamment lorsqu'elles sont utilisées pour le recalage d'images multimodales.

La présente invention se propose d'apporter une alternative aux techniques précitées.

Elle propose à cet effet un dispositif électronique de traitement d'images muni d'un module de recalage comprenant, d'une part, un premier module capable de calculer une fonction principale représentant des rapports de corrélation (tels que définis ci-après) entre les données d'un premier jeu de données représentatives d'une première image, dite de référence, et les données d'un second jeu de données représentatives d'une seconde image, dite flottante, et d'autre part, un second module ayant pour fonction de déterminer une transformation de recalage permettant de superposer l'image flottante sur l'image de référence à partir de la fonction principale calculée par le premier module.

On entend par "fonction représentative des rapports de corrélation", la fonction de la théorie des probabilités, qui n'est pas habituellement symétrique, et qui mesure pour un premier jeu de données, son degré de ressemblance avec un second jeu de données, indépendamment des niveaux d'intensité de l'un des deux jeux de données. Dans le but de simplifier le langage, on assimilera dans ce qui suit la fonction principale au rapport de corrélation. Bien entendu, à chaque fois que l'on désignera la valeur du rapport de corrélation et non pas la fonction qu'il représente, il en sera fait état.

Par ailleurs, le rapport de corrélation (en tant que fonction) doit être compris aussi bien dans son acceptation classique, c'est à dire accompagné d'une norme euclidienne qualifiée "d'ordre 2", que dans une acceptation très générale dans laquelle il est accompagné soit d'une norme non euclidienne d'ordre quelconque différent de 2, soit d'une forme quadratique quelconque d'ordre 2.

Dans un mode de réalisation particulièrement avantageux, on munit le module de recalage d'un troisième module pour estimer une fonction de densité de probabilité conjointe (ou histogramme bidimensionnel), représentative de l'intensité de la seconde image (flottante) en fonction de l'intensité de la première image (de référence), à partir des premier et second jeux de données, le premier module étant alors agencé pour calculer le rapport de corrélation à partir de cette fonction de densité de probabilité conjointe (FDPC). Cet agencement permet de faciliter le calcul du rapport de corrélation.

Selon une autre caractéristique de l'invention, on prévoit des moyens, mécaniques ou électroniques, permettant de désigner parmi les deux images celle qui sert d'image de référence (première image) et celle qui sert d'image "flottante" (seconde image), sachant que l'image flottante est celle qui doit être recalée, par la transformation de recalage à déterminer, sur l'image de référence.

Dans une variante destinée à faciliter la détermination du rapport de corrélation (en tant que fonction), on prévoit un quatrième module pour transformer le premier ou le second jeu de données (jeu de référence ou jeu flottant) en un troisième jeu de données comprenant des données dont les composantes de position correspondent à chacune des composantes de position des données du second jeu (jeu flottant) ou du premier jeu (jeu de référence), respectivement. Les composantes d'intensité des troisième et second (ou premier) jeux peuvent ainsi être directement comparées en chaque voxel, étant donné que les composantes de position associées se correspondent. Selon les variantes, le quatrième module alimente directement soit le premier module pour le calcul du rapport de corrélation, soit le troisième module pour le calcul de la fonction de densité de probabilité conjointe.

Avantageusement, la transformation du premier (ou second) jeu de données en troisième jeu de données s'effectue par application au premier (ou second) jeu d'une transformation de recalage d'initialisation suivie d'une interpolation, de préférence de type trilinéaire.

Selon encore une autre caractéristique de l'invention, le second module détermine la fonction principale (rapport de corrélation) en sélectionnant selon un critère choisi un maximum de cette fonction parmi le maximum ou les maxima qu'elle possède, la transformation de recalage est alors déterminée à partir de ce maximum sélectionné.

Les transformations de recalage sont choisies de préférence parmi les transformations géométriques n-dimensionnelles quelconques, n étant choisi au moins parmi les valeurs 2 et 3 selon la dimension des images.

Plus préférentiellement encore, la transformation de recalage est déterminée dans l'ensemble des transformations n-dimensionnelles affines, et en particulier celles dites "rigides". Mais, on pourrait également la déterminer parmi les transformations dites "non rigides", notamment.

Dans une variante particulièrement avantageuse, la transformation de recalage est calculée de manière itérative. Pour ce faire, le second module est agencé pour déterminer si la transformation de recalage qui vient d'être déterminée à partir de la fonction principale (rapport de corrélation), vérifie un critère choisi. En cas de non vérification de ce critère, la transformation de recalage venant d'être vérifiée est adressée au quatrième module en vue de remplacer la transformation précédemment utilisée pour l'obtention du troisième jeu de données. Un nouveau rapport de corrélation est alors recalculé, puis une nouvelle transformation de recalage. Cette opération est alors réitérée jusqu'à ce qu'une transformation de recalage satisfasse le critère de vérification, ou bien que l'opération ait été réitérée un nombre de fois égal à une valeur prédéterminée, éventuellement adaptable.

Dans le but de simplifier les calculs, le rapport de corrélation peut être estimé à partir de partie(s) des premier et/ou second jeux qui vérifient un critère choisi, par exemple d'intensité ou d'appartenance à une région.

L'invention s'applique tout particulièrement, bien que de façon non exclusive, aux images numériques médicales, et plus particulièrement encore aux images obtenues par des techniques d'acquisition différentes.

L'invention propose également un procédé de traitement de deux jeux de données représentant respectivement des première et seconde images numériques comparables, et comprenant une étape de recalage de la seconde image sur la première image, subdivisée en une première sous-étapes consistant à calculer une fonction principale représentative des rapports de corrélation entre les données du premier jeu et les données du second jeu, et une seconde sous-étape consistant à déterminer une transformation de recalage de l'une des deux images sur l'autre image à partir de cette fonction principale calculée.

D'autres caractéristiques et avantages de l'invention apparaîtront à l'examen de la description détaillée qui va suivre, ainsi que des dessins annexés, sur lesquels :

-    la figure 1 illustre schématiquement un mode de réalisation préférentiel de l'invention;

-    la figure 2 est un diagramme bloc illustrant les étapes de traitement d'un procédé préférentiel selon l'invention;

-    la figure 3 illustre une fonction de densité de probabilité conjointe (FDPC) d'images obtenues respectivement par résonance magnétique, dite image IRM, et par tomographie assistée par ordinateur ou scanographie;

-    les figures 4A à 4C illustrent le rapport de corrélation, associé à la FDPC de la figure 3, en fonction d'une translation dans le voisinage de la transformation standard d'or, de paramètre tx égal à environ 26,3 mm, respectivement pour des sous-échantillonnages de rapports 2x2x1 (A), 8x8x1 (B) et 12x12x1 (C); et

-    les figures 5A et 5B illustrent respectivement pour leur partie gauche, deux images de scanographie recalées sur des images IRM comparables d'un cerveau, et pour leur partie droite les deux images IRM du cerveau sur lesquelles ont été superposés des contours des images scanographie recalées de la partie gauche; ces images correspondant sensiblement à la fonction FDPC et aux rapports de corrélation illustrés respectivement sur les figures 3 et 4.

Les dessins sont, pour l'essentiel, de caractère certain. En conséquence, ils pourront non seulement servir à mieux faire comprendre l'invention, mais aussi contribuer à la définition de celle-ci.

Le recalage d'images revêt une importance de plus en plus grande, dans de nombreux domaines dès lors qu'il s'agit d'effectuer des analyses comparatives d'images obtenues soient à partir de techniques différentes, soit à partir d'une unique technique mais à des instants différents.

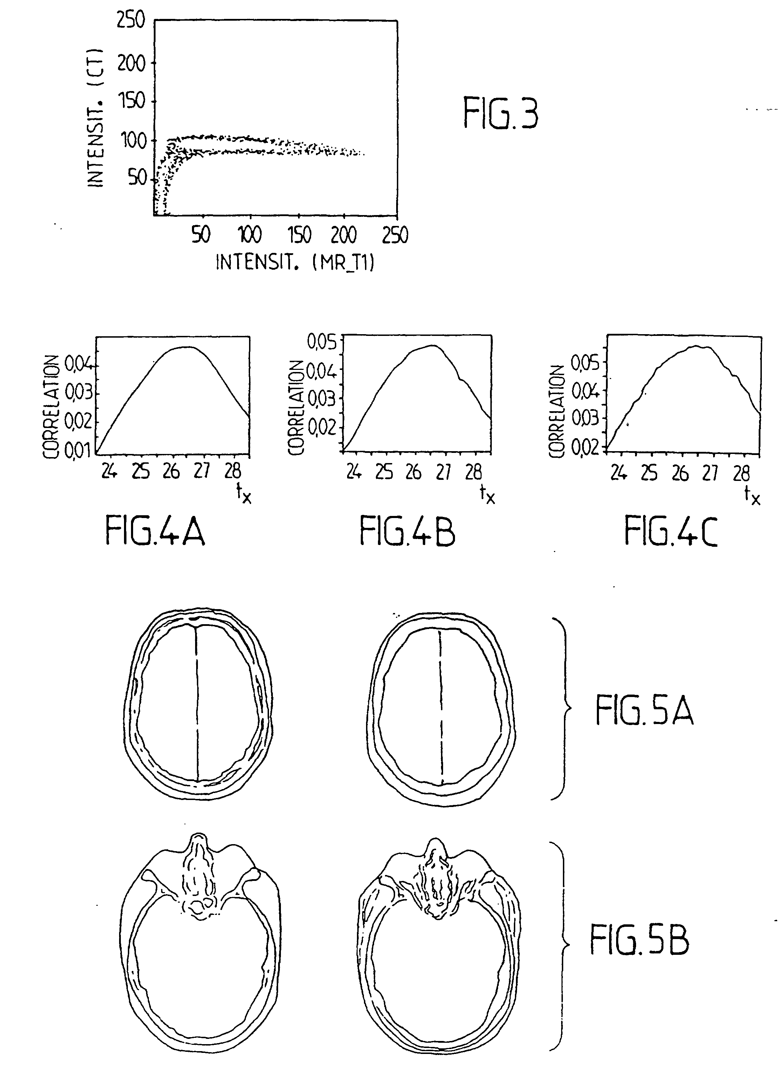

Dans ce qui suit, on fera référence, à titre d'exemple, à un traitement d'images numériques comparables du domaine médicale, du type de celles illustrées partiellement sur les parties gauche des figures 5A et 5B, lesquelles images ont été obtenues sur un cerveau d'un même sujet humain.

En matière médicale, un jeu de données représentant une image n-dimensionnelle (nD) est obtenu à l'aide d'appareils tels que les scanners à rayons X ou les appareils de résonance magnétique nucléaire, ou plus généralement tout type d'appareil capable d'acquérir des images à variation d'intensité. Les techniques d'acquisition employées couramment sont connues sous les noms de résonance magnétique (IRM), tomographie assistée par ordinateur ou scanographie, et tomographies par émission de positons (TEP).

Chaque image est subdivisée en parties élémentaires appelées voxel (ou pixel lorsque l'image n'est que bidimensionnelle). Une donnée d'un jeu de données représentant une image Nd comporte donc au moins une composante de position représentant n coordonnées spatiales par rapport à un repère tridimensionnel et une composante d'intensité représentant la valeur de la grandeur physique mesurée en cette position, généralement comprise entre les valeurs 0 et 1 ou 1 et 256. La grandeur physique mesurée dépend bien évidemment de la technique d'acquisition employée. En fait, pour être plus précis, les données d'un jeu forment une liste (ou tableau) ordonnée, et la position de la donnée dans cette liste fournit implicitement les coordonnées de position.

Dans le cas d'une technique d'acquisition de type IRM, l'image 3D acquise est constituée d'une multiplicité de coupes 2D empilées, dans lesquelles les variations d'intensité représentent la densité en proton des tissus.

Le dispositif selon l'invention est adapté pour traiter des couples de tels jeux de données représentatifs de première et seconde images. Il est plus précisément adapté au recalage de la seconde image, dite image flottante If, sur la première image, dite image de référence Ir. Ce dispositif fait généralement partie d'un calculateur raccordé à des moyens d'interface homme/machine et des moyens d'affichage de type moniteur vidéo permettant la visualisation des images non traitées et traitées.

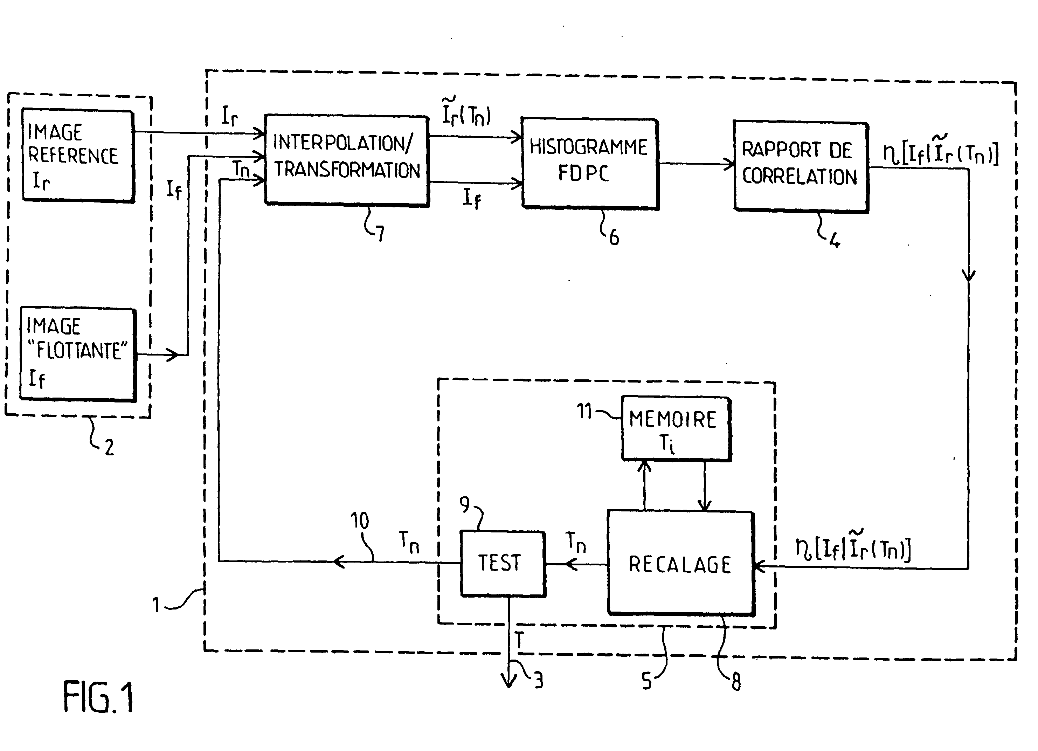

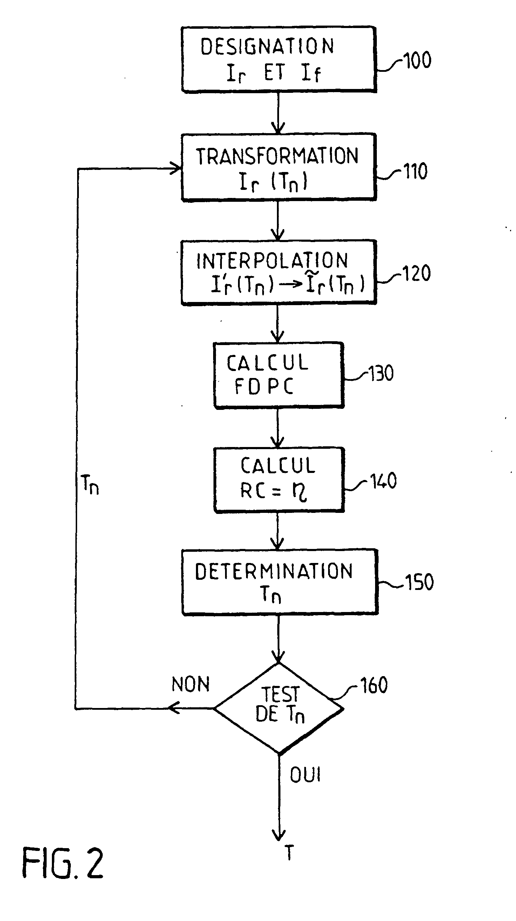

Le dispositif selon l'invention comprend un module de recalage 1 (illustré partiellement et schématiquement sur la figure 1) qui reçoit un premier J1[I1] et un second J2[I2] jeux de données, soit directement, soit par l'intermédiaire d'un module de désignation 2.

Ce module de désignation a pour objet de désigner l'une des deux images en tant qu'image "de référence" Ir, et l'autre image en tant qu'image "flottante" If; l'image flottante If devant être recalée sur l'image de référence Ir. Un tel module de désignation peut être géré de façon "mécanique" par un opérateur, par exemple via l'interface homme/machine, et dans ce cas, l'opérateur peut désigner lui-même l'image de référence et l'image flottante après avoir visualisé les première et seconde images. Mais il peut également être "autonome" si il comprend un sous-module de décision capable de comparer les première et seconde images selon un critère choisi pour désigner l'image de référence et l'image flottante.

Bien entendu, on peut envisager une variante du dispositif selon l'invention dans laquelle les première et seconde images qui alimentent le module de recalage 1 sont directement et respectivement l'image de référence Ir et l'image flottante If.

Dans ce qui suit, on assimilera la première image I1 à l'image de référence Ir et la seconde image I2 à l'image flottante If.

Le module de recalage 1 a pour fonction de déterminer une transformation de recalage T entre les première et seconde images. Cette transformation permet d'obtenir une superposition des première et seconde images d'une précision pouvant atteindre un dixième d'élément de volume (ou voxel). Mais peut être d'un type quelconque, mais de préférence elle est du type dit "rigide".

Ce module de recalage 1 comprend au moins un premier module pour estimer une fonction de similarité entre les deux images If et Ir, ainsi qu'un second module 5 plus particulièrement destiné à déterminer la transformation de recalage T qui va permettre de recaler la seconde image (ou image flottante) sur la première image (ou image de référence), et qui est délivrée sur une sortie 3.

Lorsque le module de recalage 1 fait partie d'un calculateur, la sortie 3 alimente généralement un module d'analyse permettant, par exemple, de mesurer des champs de déformation à partir des images recalées.

La fonction de similarité, encore appelée fonction principale, ou rapport de corrélation (en tant que fonction), est désignée ci-après $\eta(If/\bar{\imath}r(T))$.

De préférence, mais cela n'est pas obligatoire, le premier module 4 détermine le rapport de corrélation $\eta$ à partir d'un histogramme conjoint bidimensionnel fourni par un troisième module 6.

Plus précisément, on détermine une fonction de densité de probabilité conjointe FDPC, ou histogramme conjoint, représentative de l'intensité de la seconde image en fonction de l'intensité de la première image, puis, à partir de cette FDPC, on associe à chaque image un histogramme qui est interprété comme une fonction de densité de probabilité marginale.

Cette fonction de densité de probabilité conjointe FDPC est déterminée à partir des première et seconde images, ou plus précisément, à partir des premier J1[I1] et second J2[I2] jeux de données.

En conséquence, bien que cela ne soit pas obligatoire, on prévoit dans le module de recalage 1 un quatrième module 7 destiné à transformer le premier jeu de données J1 (représentatif de l'image de référence Ir) en un troisième jeu de données J3[$\bar{\imath}$r(Tn)] qui présente des données dont les composantes de positions sont sensiblement identiques aux composantes de positions des données du second jeu de données J2 représentatif de l'image flottante If. Bien entendu, on pourrait transformer le second jeu de données en le troisième jeu de données, à la place du premier jeu de données.

Afin d'accélérer le calcul du rapport de corrélation η, il est préférable de posséder des jeux de données qui se correspondent en position.

On part du fait que la décomposition de chaque image en voxels peut s'effectuer suivant des grilles, par exemple régulières. En d'autres termes, chaque grille représente une structure à mailles cubique simple, les sommets de chaque maille représentant un voxel. On dispose donc d'une première grille G1 pour l'image de référence Ir et d'une seconde grille G2 pour l'image flottante If. Bien entendu, les grilles pourraient être de configurations différentes.

En général, la seconde grille de l'image flottante ne correspond pas à la première grille de l'image de référence. On va donc chercher à apparier les deux grilles G1 et G2 selon une transformation affine, de préférence. Dans certains cas, on se limitera aux transformations affines dites "rigides", compositions d'une rotation et d'une translation.

Une fois la seconde grille G2 "appariée" sur la première grille G1, les données du premier jeu de données présentent de nouvelles composantes de positions (au moins pour une partie d'entre elles), du fait qu'elles sont mesurées dans un repère lié à l'image flottante If et donc à la seconde grille G2. Il faut alors déterminer les nouvelles composantes d'intensité des données dont les composantes de positions ont été modifiées du fait de l'application de la transformation Tn.

Pour ce faire, on effectue, de préférence, une interpolation de type trilinéaire. Lorsque les valeurs des composantes d'intensité sont comprises dans l'ensemble qui s'étend entre les valeurs 0 et 255, l'interpolation peut être suivie d'une opération d'arrondi de sorte que la valeur de l'intensité interpolée en une composante de position donnée soit arrondie à l'entier le plus proche. Par ailleurs, et toujours de préférence, les données (ou voxels) de la première grille transformée qui ne possèdent pas un nombre choisi, par exemple égal à 8, de voisins dans la seconde grille G2, sont éliminées. La transformation suivie de l'interpolation, et éventuellement des opérations d'arrondi et d'élimination de voxels particuliers, appliquées au premier jeu de données, fournit le troisième jeu de données J3 associé à l'image transformée [$\bar{\imath}$r(Tn)].

Dans l'exemple illustré sur la figure 1, le quatrième module 7 fournit au troisième module 6 les second J2[If] et troisième J3[$\bar{\imath}$r(Tn)], pour qu'il détermine la fonction de densité de probabilité conjointe FDPC (ou histogramme conjoint). Cette fonction, et le cheminement mathématique permettant son obtention, sont donnés dans l'annexe 1.

Un exemple d'un tel histogramme FDPC est illustré sur la figure 3, où l'image recalée (seconde image) a été obtenue par scanographie, tandis que l'image de référence (première image) a été obtenue à l'aide d'une technique de type IRM.

Avec le formalisme décrit précédemment, la variable X ou Y qui représente la composante d'intensité de chaque donnée d'un jeu de données est donc assimilée à une variable aléatoire. En d'autres termes, si l'on tire au sort un voxel (ou une donnée) d'une image, par exemple la première I1, la probabilité d'obtenir une intensité de valeur i est égale au rapport entre le nombre de voxels Ni de la première image (ou nombre de données de celle-ci) possédant une intensité de valeur i et le nombre total N de voxels de cette image (N=ΣNi).

Il faut préciser ici que ce caractère aléatoire est artificiel et ne doit pas être confondu avec la nature stochastique d'une mesure de bruit.

La fonction de densité de probabilité conjointe FDPC, estimée par le troisième module 6, est fournie au premier module 4 pour que celui-ci détermine le rapport de corrélation (en tant que fonction) η.

Pour déterminer un rapport de corrélation, tel qu'il est défini dans la théorie des probabilités, il faut tout d'abord définir l'espace dans lequel ce rapport va être calculé, ainsi que la norme associée.

L'invention peut être mise en oeuvre dans de nombreux types d'espaces munis de normes variées. Ainsi, on pourra se placer dans l'espace $L^2$ ($\mathbb{R}$) des variables aléatoires réelles de carré sommable. Cet espace est un espace de Hilbert pour le produit scalaire et possède une norme euclidienne de type standard (qualifiée d'ordre 2). Mais on peut également travailler dans un espace $L^1$($\mathbb{R}$) muni de la norme 1 standard, ou bien dans d'autres ensembles munis d'une norme non euclidienne d'ordre quelconque différent de 2, ou bien encore dans des espaces munis d'une forme quadratique quelconque d'ordre 2.

La définition mathématique du rapport de corrélation η est donnée dans l'annexe 1, dans le cadre de l'espace $L^2$ ($\mathbb{R}$) des variables aléatoires réelles de carré sommable. En résumé, le rapport de corrélation est une fonction de deux variables aléatoires réelles X et Y qui, à ce couple (X,Y) de variables aléatoires, associe une valeur réelle appartenant à l'ensemble fermé [0;1]. Dans la mesure où X et Y représentent les composantes d'intensité de $\bar{\imath}$r(Tn) et If, cette fonction mesure la ressemblance des deux "objets" représentés par l'image de référence Ir et l'image flottante If, indépendamment des niveaux d'intensité de l'une de ces deux images, et de préférence de ceux de l'image de référence Ir. En d'autres termes, cette fonction (rapport de corrélation) permet de quantifier le degré de dépendance fonctionnelle entre les deux variables aléatoires qui représentent les composantes d'intensité des première et seconde images.

Le rapport de corrélation (en tant que fonction) déterminé, $\eta$, fourni par le premier module 4 est alors transmis au second module 5. En langage informatique, on dit que l'on envoie au second module 5 un pointeur sur la fonction $\eta$ (rapport de corrélation).

Le second module 5 comporte un module de calcul 8 qui détermine la transformation de recalage T qui maximise le rapport de corrélation $\eta$. On peut reformuler cela sous forme mathématique :

T = argmax [$\eta(Y_T/X)$], où $Y_T$ et X désignent les variables aléatoires associées aux images $\tilde{I}f(Tn)$ et Ir (dans cet exemple).

argmax[f] désigne l'ensemble des valeurs pour lesquelles une fonction f est maximale.

Dans la mesure où la fonction $\eta$ peut avoir plusieurs maxima locaux, y compris de même valeur, le module de calcul 8 est agencé pour choisir l'un de ces maxima et lui associer la transformation de recalage. La méthode mise en oeuvre pour choisir un maximum dépend de l'algorithme mis en oeuvre par le module de calcul 8. Un critère de choix peut consister en la comparaison de chaque maximum de $\eta$ à une valeur seuil. Dans l'hypothèse où $\eta$ ne présente qu'un unique maximum, comme cela est illustré sur la figure 4A (laquelle illustre le rapport de corrélation déduit de la fonction de densité de probabilité conjointe illustré sur la figure 3), la détermination de la transformation de recalage T est particulièrement simple, et il n'est pas réellement besoin de lui appliquer le critère de choix.

De préférence, la transformation de recalage T est déterminée parmi les transformations rigides tridimensionnelles bien connues de l'homme de l'art. Mais il est clair que l'on pourrait utiliser d'autres types de transformations pour déterminer la transformation de recalage T, et notamment des transformations non rigides.

Egalement de préférence, comme cela est illustré sur la figure 1, la détermination de la transformation de recalage s'effectue de manière itérative. En effet, lorsque l'on souhaite obtenir une transformation de recalage de grande précision, on est obligé de vérifier si la transformation Tn déterminée par le module de calcul 8 présente le degré de précision désiré, lequel peut être fixé par l'opérateur.

Pour ce faire, on prévoit en sortie du module de calcul 8 un module de test 9 qui soumet la transformation Tn à un test, en le comparant par exemple à un critère d'arrêt choisi. Un tel critère peut porter sur l'écart de variation entre deux transformations Tn-1 et Tn successives, l'arrêt étant décidé lorsque l'écart de variation est inférieur à un seuil choisi (critère dit de convergence). Un tel critère de convergence est habituellement intégré, directement, dans l'algorithme d'optimisation mis en oeuvre. Bien entendu, on pourrait prévoir d'autres critères de test, comme par exemple un critère portant sur le degré de superposition de l'image flottante sur l'image de référence.

Le module de test 9 présente, dans l'exemple illustré sur la figure 1, deux sorties dont la sortie 3 du module de recalage 1, qui délivre la transformation de recalage "finale" T lorsque Tn vérifie le critère choisi, et une sortie 10 qui est raccordée au quatrième module 7 de manière à lui fournir la transformation de recalage Tn lorsque celle-ci ne vérifie pas le critère choisi.

En d'autres termes, lorsque la transformation de recalage Tn déterminée par le module de calcul 8 est jugée de qualité suffisante par le module de test 9, celui-ci délivre sur sa sortie 3 la transformation finale de recalage T, tandis que, lorsque Tn est jugée de qualité insuffisante, le module de test 9 transmet, par sa sortie 10, la transformation de recalage Tn au quatrième module 7.

Il est clair que, dans les variantes simplifiées de l'invention qui ne possèdent pas de quatrième module et/ou de troisième module, la transformation de recalage Tn est fournie directement au premier module 4, ou au troisième module 6.

La transformation de recalage Tn que reçoit (dans cet exemple) le quatrième module 7 remplace alors la précédente transformation qui se trouvait mémorisée, et qui avait permis de déterminer le troisième jeu de données J3[$\tilde{I}r(Tn)$).

Lors du premier traitement des jeux de données, la transformation T0 utilisée par le quatrième module 7 peut être considérée comme une transformation d'initialisation. Bien entendu, ce mode de réalisation ne concerne que les dispositifs dans lesquels le module de recalage 1 effectue un traitement itératif, comme illustré sur la figure 1.

Muni de cette nouvelle transformation Tn (dans la seconde itération n=1), le quatrième module 7 détermine alors un nouveau troisième jeu de données J3[$\tilde{I}r(Tn)$] qu'il transmet alors au troisième module 6 (bien entendu lorsque le dispositif en comprend un) de sorte que la fonction de densité de probabilité conjointe FDPC soit de nouveau calculée, puis transmise au premier module 4 en vue de la détermination d'un nouveau rapport de corrélation $\eta$ associé à la dernière transformation Tn calculée. Ce nouveau rapport de corrélation est alors fourni au second module 5 pour que son module de calcul 8 détermine une nouvelle transformation de recalage Tn (lors de la seconde itération, n=2 en sortie du module de calcul 8).

De préférence, le second module 5 comporte une mémoire 11 dans laquelle se trouvent stockées (au fur et à mesure) toutes les transformations de recalage Ti (i=n) déterminées par le module de calcul 8. De la sorte, le module de calcul 8 peut mettre en oeuvre un algorithme d'optimisation, par exemple de type Powell, bien connu de l'homme de l'art. Cet algorithme de Powell repose sur un méthode de jeux de directions multidimensionnelles couplée à une optimisation de lignes de Brent du type de celle décrite dans la publication de W.H. Press, B.P. Flannery, S.A. Teukolski et W.T. Vetterling, Numerical Recipes in C. Cambridge University Press, 2ème édition, 1992. Bien entendu, d'autres algorithmes d'optimisation peuvent être utilisés.

Pour déterminer la nouvelle transformation de recalage Tn, le module de calcul 8 se sert à la fois du nouveau rapport de corrélation $\eta$ qui vient d'être recalculé par le premier module 4, et des précédentes transformations de recalage Ti stockées dans la mémoire 11. La nouvelle transformation de recalage Tn qui résulte de ce calcul est alors transmise au module de test 9 qui décide, par application du critère choisi, soit de la délivrer sur la sortie 3 sous la forme de la transformation finale de recalage T, soit de la délivrer sur la sortie 10 de sorte qu'une nouvelle itération soit effectuée. Ce mécanisme peut être répété, soit jusqu'à obtention d'une transformation finale de recalage T vérifiant le critère choisi, soit lorsque le nombre d'itérations dépasse un nombre seuil prédéterminé, lequel peut être adapté par l'opérateur, éventuellement.

Les étapes de traitement d'un procédé selon l'invention, qui met en oeuvre le dispositif itératif qui venant d'être décrit, sont illustrées sur la figure 2, sous la forme d'un diagramme bloc schématique.

Le procédé selon l'invention, illustré sur cette figure 2, comprend une première étape 100 dans laquelle la première image est désignée comme image de référence Ir et la seconde image comme image flottante If. Dans une seconde étape 110, on effectue une transformation du premier jeu de données représentant l'image de référence Ir (Tn), de manière à obtenir une superposition des composantes de position des données du premier jeu de données sur les composantes de position des données du second jeu de données. On effectue ensuite, dans une troisième étape 120, une interpolation, de préférence de type trilinéaire, sur les données transformées du premier jeu de données, de manière à déterminer les nouvelles composantes d'intensité correspondant aux nouvelles composantes de position du premier jeu J1. Cela fournit un troisième jeu de données J3[$\bar{\text{ir}}$(Tn)] associé au premier jeu J1.

Ensuite, dans une quatrième étape 130, on détermine une fonction de densité de probabilité conjointe FDPC à partir du second jeu de données J2 et du troisième jeu de données J3[$\bar{\text{ir}}$(Tn)], de manière à obtenir une représentation probabiliste des images de référence Ir (en fait $\bar{\text{ir}}$(Tn)) et flottante If.

Puis, dans une cinquième étape 140, on calcule une fonction principale représentative des rapports de corrélation entre les données du premier jeu J1 (en fait celles du troisième jeu J3) et les données du second jeu J2.

Dans une sixième étape 150, on procède à la détermination d'une transformation de recalage Tn destinée à permettre le recalage (ou superposition) de l'image flottante If sur l'image de référence Ir.

De préférence, en sortie de cette sixième étape, on effectue un test 160 sur la transformation de recalage Tn, de manière à déterminer si elle présente un degré de qualité suffisant. Si la transformation de recalage Tn déterminée à l'étape 150 vérifie le critère qui lui est appliqué lors du test 160, alors ladite transformation de recalage Tn est considérée comme la transformation finale de recalage T, ce qui met fin au procédé. En revanche, si la transformation Tn ne vérifie pas le critère appliqué lors du test 160, alors ladite transformation de recalage Tn est retournée à la seconde étape 110 où elle vient remplacer la transformation précédente, laquelle avait été appliquée à l'image de référence Ir représentée par le premier jeu de données. Les étapes 110 à 160 sont alors recommencées autant de fois qu'il est nécessaire pour obtenir une transformation T finale dont le degré de qualité est suffisant, ou bien autant de fois que le permet le procédé, lorsque celui-ci comporte un nombre d'itérations maximal choisie, et éventuellement adaptable.

Bien entendu, certaines des étapes du procédé qui vient d'être décrit en référence à la figure 2 ne sont pas nécessaires. Ainsi, on pourrait passer directement de l'étape 100 à l'étape 140, sans effectuer de transformation du premier jeu, d'interpolation et de calcul de la fonction de densité de probabilité conjointe FDPC. Par ailleurs, on pourrait se passer de la seule étape 130, tout en conservant les étapes 110 et 120.

Il en va de même pour les dispositifs selon l'invention, comme cela a déjà été exposé précédemment. On peut en effet démontrer qu'il est possible de déterminer le rapport de corrélation (en tant que fonction) sans avoir besoin de déterminer au préalable un histogramme conjoint des deux images de référence et flottante (ou FDPC). Pour ce faire, il suffit de réécrire les équations données dans l'annexe 1 dans un formalisme local, du fait que la probabilité conjointe des deux images est définie par une simple normalisation de leur histogramme bidimensionnel. Il est donc possible d'exprimer une relation simple entre la probabilité dite marginale de la variable aléatoire représentant les composantes d'intensité de l'image de référence et les Ni composantes d'intensité des données représentant ladite image de référence qui présentent une même intensité de valeur i. Le détail de ce calcul est donné en annexe 2.

Par ailleurs, dans le but de simplifier les calculs, et par conséquent les temps de calcul, il est possible d'effectuer la détermination de la transformation de recalage à partir de certaines des données des jeux de données des images de référence et flottante. En d'autres termes, il est possible de présélectionner certaines données des jeux de données de sorte que le traitement ne soit appliqué qu'à ces seules données sélectionnées, les autres données n'étant pas considérées comme pertinentes pour l'opération de recalage.

Sur les figures 4A à 4C, se trouvent illustrés trois exemples de traitement des jeux de données des images de référence et flottante pour trois sélections de données différentes (encore appelées sous-échantillonnages). Le rapport de corrélation illustré sur la figure 4A a été obtenu à partir d'un sous-échantillonnage du second jeu de données représentant l'image flottante (obtenue par une scanographie) d'un facteur 2x2x1. En d'autres termes, une donnée sur deux dans la direction des X et une données sur deux dans la direction des Y ont été supprimées.

Les figures 4B et 4C illustrent respectivement les rapports de corrélation pour des sous-échantillonnages des données du second jeu d'une image flottante (obtenue par scanographie) par des facteurs 8x8x1, et 12x12x1, respectivement.

Deux exemples de recalage d'image (obtenues par scanographie) sont illustrés sur les figures 5A et 5B, les parties gauches de ces figures représentant l'image recalée (scanographie), tandis que les parties droites de ces figures représentent les images de référence de type IRM sur lesquelles ont été superposés les contours des parties pertinentes de l'image recalée (scanographie).

Le dispositif selon l'invention peut être implanté dans une mémoire, par exemple de masse, d'un ou plusieurs moyens de calcul de type station de travail et/ou ordinateur, sous la forme de modules logiciels.

A toutes fins utiles, il est précisé que des éléments descriptifs plus détaillés sont indiqués dans la publication "Multimodal Image Registration by Maximization of the Correlation Ratio", de A.Roche, G.Malandain, N.Ayache et X. Pennec, Rapport de Recherches INRIA, qui sera rendu public après dépôt de la présente Demande de Brevet.

L'invention ne se limite pas aux modes de réalisation décrits ci-avant, seulement à titre d'exemple, mais elle englobe toutes les variantes que pourra envisager l'homme de l'art dans le cadre des revendications ci-après.

Ainsi, on a décrit un dispositif de traitement d'images 2D ou 3D, et le procédé associé, destinés à traiter des images en particulier médicales, et notamment du cerveau. Mais il est clair que l'invention n'est pas limitée à ce seul domaine. Elle s'applique également à d'autres secteurs du domaine médical, ainsi qu'aux domaines non médicaux pour lesquels le recalage d'images d'objets 2D ou 3D revêt un intérêt particulier.

Par ailleurs, on a décrit un mode de traitement d'images dans lequel on utilisait des transformations de recalage n-dimensionnelles affines, notamment de type rigide. Mais l'invention s'étend de façon plus générale aux transformations de recalage non-rigides, notamment les transformations géométriques n-dimensionnelles quelconques, comme par exemple les transformations de type splines.

ANNEXE 1

Calcul du rapport de corrélation

Soit $L^2$ l'espace des variables réelles de carré sommable

$$E(X^2) = \int_\Omega X^2 \, dPr < +\infty$$

où E désigne l'opérateur "espérance".

$L^2$ est un espace de Hilbert relativement au produit scalaire $<X,Y> = E(XY)$, et il lui correspond la norme :

$$\|X\|_2 = \sqrt{E(X^2)}$$

que l'on peut réécrire :

$$\|X-E(X)\|_2 = \sqrt{Var(X)} = StdDev(X)$$

où les opérateurs Var et StdDev désignent respectivement la "variance" et la déviation "standart".

En raison de la structure hilbertienne de $L^2$, il est possible de définir une notion d'orthogonalité entre deux variables X et Y:

$$X \perp Y \Longleftrightarrow E(XY) = 0$$

ce qui permet de démontrer que :

$$X \text{ et } Y \text{ independants} \Rightarrow X - E(X) \perp Y - E(Y)$$

On peut alors déterminer l'angle entre deux variables X et Y grâce aux propriétés fondamentales du produit scalaire :

$$(X,\ Y) = \|X\|_2 \|Y\|_2\ COS\ \alpha$$

$L^2$ contient par ailleurs l'espace unidimensionnel $\Delta$ des variables déterministes, c'est à dire celles qui sont constantes dans l'espace des états $\Omega$. Donc, soit une variable X, l'espérance E peut alors être réécrite :

$$E(X)\ =\ \int_R xp(x)\,dx\ =\ (X, 1)$$

E(X) est donc la projection orthogonale de X sur $\Delta$. On peut alors réécrire E(X) comme suit :

$$E(X)\ =\ \underset{C \in \Delta}{arg\ min}\ \|X - C\|_2^2$$

A l'aide de ce formalisme, on peut déterminer la dépendance fonctionnelle entre deux variables indépendantes X et Y. En effet, dans ce cas, la connaissance d'un événement X=x fournit une information nouvelle sur Y, et chaque événement X=x induit une fonction de densité de probabilité conditionnelle pour Y :

$$p(y|x) = \frac{p(x,y)}{p(x)}$$

à cette fonction correspond l'espérance de Y à posteriori :

$$\Phi^*(x) = E(Y|X = x) = \int yp(y|x)\ dy$$

on a donc pour chaque événement X :

$$E(Y|X) = \Phi^*(X)$$

Et l'on peut vérifier que

$$E[E(Y|X)] = E(Y)$$

ce qui veut dire que E(Y|X) est une variable aléatoire fonction de X qui est la plus proche de Y :

$$\Phi^* = arg\ min_\Phi\ \|Y - \Phi(X)\|_2$$

L'interprétation géométrique de l'espérance conditionnelle est donnée ci-après. Soit $L_x$ le sous-espace de chaque fonction possible $\phi$ de X :

$$L_x\ =\ L^2 \cap \{\Phi(X)\ |\ \Phi : \mathbb{R} \to \mathbb{R}\}$$

on a donc :

$$Y - E(Y|X) \perp E(Y|X) - E(Y)$$

et par application du théorème de Pythagore, on retrouve la variance :

$$Var(Y) = \|Y - E(Y)\|_2^2$$

$$= \|E(Y|X) - E[E(Y|X)]\|_2^2 + \|Y - E(Y|X)\|_2^2$$

$$= \|E(Y|X) - E(Y)\|_2^2 + \iint_{\mathbb{R}\,\mathbb{R}} [y - \Phi^\bullet(x)]^2\, p(x,y)\, dx\, dy$$

$$= Var[E(Y|X)] + \int_R (\int_R [y - \Phi^\bullet(x)]^2\, p(y|x)\, dy)\, p(x)\, dx$$

Si l'on pose :

$$Var(Y|X = x) = \int_{\mathbb{R}} [y - \Phi^\bullet(x)]^2\, p(y|x)\, dx$$

et

$E_x$, l'opérateur défini par

$$\forall\, \psi : \mathbb{R} \to \mathbb{R},\ E_x(\psi) = \int_{\mathbb{R}} \psi(x)\, p(x)\, dx$$

on peut alors réécrire la variance :

$$Var(Y) = Var[E(Y|X)] + E_x [Var(Y|X=x)]$$

Le rapport de corrélation est défini par le rapport :

$$\eta(Y|X) = \frac{Var[E(Y|X)]}{Var(Y)}$$

que l'on peut réécrire :

$$1 - \eta(Y|X) = \frac{E_x [Var(Y|X=x)]}{Var(Y)}$$

Si l'on considère maintenant deux variables X et $Y_T$ représentant deux images à recaler l'une sur l'autre, T étant une transformation donnée permettant de passer de l'image Y à l'image X, le rapport de corrélation $\eta$ pour la

transformation T est donc donné par l'équation :

$$1-\eta\,(Y_T|X) = \frac{E_x\,[Var\,(Y_T|X{=}x)]}{Var\,(Y_T)}$$

que l'on peut réécrire :

$$1-\eta\,(Y_T|X) = \frac{1}{\sigma^2}\,\sum_i \sigma_i^2\,P_{x,T}(i)$$

où :

$$\sigma^2 = \sum_j j^2\,P_{y,T}(i) - m^2$$

$$\sigma_i^2 = \frac{1}{P_{x,T}(i)}\,\sum_j j^2\,P_T(i,j) - m_i^2$$

$$m = \sum_j j\,P_{y,T}(j)$$

$$m_i = \frac{1}{P_x(i)} = \sum_j j\,P_T(i,j)$$

$P_T$ est ici la densité de probabilité conjointe des deux variables X et $Y_T$ et, $P_{X,T}$ et $P_{Y,T}$ sont les densités de probabilité marginales desdites variables.

ANNEXE 2

Approche probabiliste dite "locale"

Soit X et Y, deux images, et soit P(i,j) la probabilité conjointe de X et Y. Alors les probabilités marginales de X ($P_X(i)$) et de Y ($P_Y(j)$) sont données respectivement par :

$$\forall i,\ P_x(i) = \sum_j P(i,j)$$

et

$$\forall j,\ P_y(j) = \sum_i P(i,j)$$

La probabilité conditionnelle de Y sachant X est alors donné par :

$$P(j/i) = \frac{P(i,j)}{P_x(i)}$$

Partant de la définition du rapport de corrélation donnée $\in$ annexe 1 :

$$\eta\ (\ Y|X\ ) = 1 - \frac{E_x[Var\ (Y|X)]}{Var\ (Y)}$$

on peut la réécrire :

$$\eta\ (Y|X)\ =\ \frac{1}{\sigma^2}\ \sum_i\ \sigma_i^2\ P_x(i)$$

avec :

$$\sigma^2 = \textstyle\sum_j j^2\ P_y\ (j) - m^2$$

$$m = \textstyle\sum_j j\ P_y(j)$$

$$\sigma_i^2 = \textstyle\sum_j j^2\ P(j|i) - m_i^2$$

$$m_i = \textstyle\sum_j j\ P(j|i)$$

$\sigma^2$ et m sont respectivement la variance et la moyenne de l'image Y.
Soit $\Omega$ la région commune aux deux images X et Y, N le nombre total de voxels (de coordonnées $\tilde{\omega}$) que contient cette région, et $S_i$ l'ensemble iso-densité de X correspondant à une intensité i et $N_i$ son cardinal, on a alors :

$$S_i = \{\omega,\ X(\omega) = i\}, \qquad N_i = Card\ S_i$$

Les $S_i$ forment alors une partition de $\Omega$, et donc :

$$\sum_i\ N_i\ =\ N$$

On peut alors réexprimer la probabilité marginale de X en fonction des $N_i$ :

$$P_x(i) = \frac{N_i}{N}$$

On en déduit alors les variance et moyenne :

$$\sigma^2\ =\ \frac{1}{N}\ \sum_{\omega\in\Omega}\ Y(\omega)^2\ -\ m^2, \qquad m\ =\ \frac{1}{N}\ \sum_{\omega\in\Omega}\ Y(\omega)$$

Etant donné un niveau d'intensité i dans l'image X, les moments conditionnels de Y sachant X=i sont donc les moments de la restriction de Y au sous-ensemble $S_i$. On peut donc réécrire les variances et moyennes conditionnelles d'une façon analogue aux moments totaux :

$$\sigma_i^2 = \frac{1}{N_i} \sum_{\omega \in S_i} Y(\omega)^2 - m_i^2, \quad m_i = \frac{1}{N_i} \sum_{\omega \in S_i} Y(\omega)$$

ce qui permet de déterminer le rapport de corrélation η.

**Revendications**

1.  Dispositif électronique de traitement de données, destiné à recevoir des premier et second jeux de données représentant des première et seconde images numériques comparables, chaque donnée comprenant une composante de position et une composante d'intensité, et comprenant des moyens de recalage (1) propres, à partir de ces deux jeux de données, à déterminer une transformation de recalage entre l'une des images et l'autre,
    **caractérisé en ce que** lesdits moyens de recalage (1) comprennent un premier module (4) propre à calculer une fonction principale représentative des rapports de corrélation entre les données dudit premier jeu et les données dudit second jeu, et un second module (5) propre à déterminer ladite transformation de recalage à partir de ladite fonction principale.

2.  Dispositif selon la revendication 1, **caractérisé en ce que** le calcul de ladite fonction principale s'effectue dans un espace muni d'une norme choisie.

3.  Dispositif selon la revendication 2, **caractérisé en ce que** ledit espace est un espace de Hilbert.

4.  Dispositif selon l'une des revendications 1 à 3, **caractérisé en ce que** lesdits moyens de recalage (1) comprennent un troisième module (6) propre à estimer une fonction de densité de probabilité conjointe à partir desdits premier et second jeux de données, et **en ce que** le premier module (4) est agencé pour calculer ladite fonction principale à partir de ladite fonction de densité de probabilité conjointe.

5.  Dispositif selon la revendication 4, **caractérisé en ce que** le calcul de la fonction de densité de probabilité conjointe porte sur les composantes d'intensité des données desdits jeux.

6.  Dispositif selon l'une des revendications 1 à 5, **caractérisé en ce qu'**il comprend des moyens (2) pour permettre la désignation de l'une des deux images, dite première image, en tant qu'image "de référence", et de l'autre image, dite seconde image, en tant qu'image "flottante", de sorte que ladite transformation de recalage soit déterminée pour le recalage de ladite image flottante sur ladite image de référence.

7.  Dispositif selon l'une des revendications 4 à 6, **caractérisé en ce qu'**il comprend un quatrième module (7) agencé pour transformer ledit premier jeu de données en un troisième jeu de données comprenant des données dont les composantes de position correspondent à chacune des composantes de position des données du second jeu.

8.  Dispositif selon la revendication 7, **caractérisé en ce que** ladite transformation du premier jeu de données comporte l'application d'une transformation de recalage d'initialisation et une interpolation.

9.  Dispositif selon la revendication 8, **caractérisé en ce que** ladite interpolation est de type trilinéaire.

10. Dispositif selon l'une des revendications 1 à 9, **caractérisé en ce que** ledit second module (5) est agencé pour choisir une valeur maximale de la fonction principale selon un critère choisi et déterminer la transformation de recalage à partir de ladite valeur maximale.

11. Dispositif selon l'une des revendications 1 à 10, **caractérisé en ce que** lesdites transformations de recalage sont déterminées dans l'ensemble des transformations géométriques n-dimensionnelles quelconques, n étant choisi au moins parmi les valeurs 2 et 3 selon la dimension des images.

12. Dispositif selon la revendication 11, **caractérisé en ce que** lesdites transformations géométriques n-dimensionnelles sont déterminées dans l'ensemble des transformations n-dimensionnelles affines, en particulier celles dites "rigides".

**13.** Dispositif selon l'une des revendications 8 à 12 en combinaison avec la revendication 4, **caractérisé en ce que** ledit second module (5) est agencé pour déterminer si ladite transformation de recalage vérifie un critère choisi, en cas de non vérification dudit critère la transformation de recalage étant adressée au troisième module (6) de manière à remplacer ladite transformation précédemment utilisée pour l'obtention dudit troisième jeu de données en vue d'une nouvelle détermination de transformation de recalage.

**14.** Dispositif selon l'une des revendications 1 à 13, **caractérisé en ce que** les moyens de recalage (1) sont agencés pour estimer ladite fonction principale à partir de données desdits premier et second jeux vérifiant un critère choisi.

**15.** Dispositif selon l'une des revendications précédentes, **caractérisé en ce que** les images numériques comparables sont des images médicales.

**16.** Dispositif selon l'une des revendications précédentes, **caractérisé en ce que** la première et la seconde image proviennent de techniques d'acquisition différentes.

**17.** Procédé de traitement de deux jeux de données représentant respectivement des première et seconde images numériques comparables, et comprenant une étape dans laquelle on détermine une transformation de recalage entre l'une des images et l'autre, à partir des deux jeux de données,
    **caractérisé en ce que** ladite étape comprend les sous-étapes suivantes :

    a) calculer une fonction principale représentative des rapports de corrélation entre les données dudit premier jeu et dudit second jeu, et
    b) déterminer ladite transformation de recalage à partir de ladite fonction principale calculée.

**Patentansprüche**

**1.** Elektronische Datenverarbeitungsvorrichtung, die dazu bestimmt ist, einen ersten und einen zweiten Datensatz zu empfangen, die ein erstes und ein vergleichbares zweites digitales Bild darstellen, wobei jedes Datenelement eine Positionskomponente und eine Intensitätskomponente enthält, und die eigene Überlagerungseinrichtungen (1) umfasst fähig aufgrund dieser beiden Datensätze eine Überlagerungstransformation zwischen dem einen und dem anderen Bild zu bestimmen,
**dadurch gekennzeichnet, dass** die genannten Überlagerungseinrichtungen (1) einen erster Modul (4) umfassen, fähig eine für die Korrelationsverhältnisse zwischen den Daten des genannten ersten Satzes und den Daten des genannten zweiten Satzes repräsentative Hauptfunktion zu berechnen, und einen zweiten Modul (5) umfassen, fähig die genannte Überlagerungstransformation aufgrund der genannten Hauptfunktion zu bestimmen.

**2.** Vorrichtung nach Anspruch 1, **dadurch gekennzeichnet, dass** die Berechnung der genannten Hauptfunktion in einem Raum mit einer gewählten Norm erfolgt.

**3.** Vorrichtung nach Anspruch 2, **dadurch gekennzeichnet, dass** der genannte Raum ein Hilbert-Raum ist.

**4.** Vorrichtung nach einem der Ansprüche 1 bis 3, **dadurch gekennzeichnet, dass** die genannten Überlagerungseinrichtungen (1) einen dritten Modul (6) umfassen, fähig aufgrund der genannten ersten und zweiten Datensätze eine Wahrscheinlichkeitsdichte-Verbundfunktion zu schätzen, und dadurch, dass der erste Modul (4) eingerichtet ist, um die genannte Hauptfunktion aufgrund der Wahrscheinlichkeitsdichte-Verbundfunktion zu berechnen.

**5.** Vorrichtung nach Anspruch 4, **dadurch gekennzeichnet, dass** die Berechnung der Wahrscheinlichkeitsdichte-Verbundfunktion sich auf die Intensitätskomponenten der Daten der genannten Sätze bezieht.

**6.** Vorrichtung nach einem der Ansprüche 1 bis 5, **dadurch gekennzeichnet, dass** sie Einrichtungen (2) zur Bezeichnung eines der beiden Bilder, erstes Bild genannt, als "Bezugsbild" und des anderen Bilds, zweites Bild genannt, als "Schwebebild" umfasst, so dass die genannte Überlagerungstransformation für die Überlagerung des genannten Schwebebilds durch das genannte Bezugsbild bestimmt wird.

**7.** Vorrichtung nach einem der Ansprüche 4 bis 6, **dadurch gekennzeichnet, dass** sie einen vierten Modul (7) umfasst, eingerichtet um den genannten ersten Datensatz umzuwandeln in einen dritten Datensatz, der Daten umfasst, deren Positionskomponenten jeder der Positionskomponenten der Daten des zweiten Satzes entsprechen.

8. Vorrichtung nach Anspruch 7, **dadurch gekennzeichnet, dass** die genannte Transformation des ersten Datensatzes die Anwendung einer Initialisierungs-Überlagerungstransformation und eine Interpolation umfasst.

9. Vorrichtung nach Anspruch 8, **dadurch gekennzeichnet, dass** die genannte Interpolation vom trilinearen Typ ist.

10. Vorrichtung nach einem der Ansprüche 1 bis 9, **dadurch gekennzeichnet, dass** der genannte zweite Modul (5) eingerichtet ist, um einen Maximalwert der Hauptfunktion nach einem ausgewählten Kriterium zu wählen und die Überlagerungstransformation aufgrund des gewählten Maximalwerts zu bestimmen.

11. Vorrichtung nach einem der Ansprüche 1 bis 10, **dadurch gekennzeichnet, dass** die genannten Überlagerungstransformationen bei der Gesamtheit der beliebigen n-dimensionalen geometrischen Transformationen bestimmt werden, wobei n wenigstens zwischen den Werten 2 und 3 ausgewählt wird, je nach der Dimension des Bildes.

12. Vorrichtung nach Anspruch 11, **dadurch gekennzeichnet, dass** die genannten n-dimensionalen geometrischen Transformationen bei der Gesamtheit der n-dimensionalen Affintransformationen bestimmt werden, insbesondere bei den sogenannten "rigiden" Transformationen.

13. Vorrichtung nach einem der Ansprüche 8 bis 12 in Verbindung mit dem Anspruch 14, **dadurch gekennzeichnet, dass** der genannte zweite Modul (5) eingerichtet ist, um zu bestimmen, ob die genannte Überlagerungstransformation ein gewähltes Kriterium verifiziert, wobei im Falle einer Nicht-Verifikation des genannten Kriteriums die Überlagerungstransformation an den dritten Modul (6) adressiert wird, um die genannte, vorhergehend zur Erlangung des genannten dritten Datensatzes benutzte Transformation hinsichtlich einer neuen Überlagerungstransformations-bestimmung zu ersetzen.

14. Vorrichtung nach einem der Ansprüche 1 bis 13, **dadurch gekennzeichnet, dass** die Überlagerungseinrichtungen (1) eingerichtet sind, um die genannte Hauptfunktion aufgrund von Daten des ersten und zweiten Satzes zu bestimmen, die ein gewähltes Kriterium verifizieren.

15. Vorrichtung nach einem der vorangehenden Ansprüche, **dadurch gekennzeichnet, dass** die vergleichbaren digitalen Bilder medizinische Bilder sind.

16. Vorrichtung nach einem der vorangehenden Ansprüche, **dadurch gekennzeichnet, dass** das erste und das zweite Bild von unterschiedlichen Erfassungstechniken stammen.

17. Verfahren zur Verarbeitung von zwei Datensätzen, jeweils ein erstes und ein vergleichbares zweites digitales Bild darstellend, das einen Schritt umfasst, in dem man aufgrund der beiden Datensätze eine Überlagerungstransformation zwischen dem einen und dem anderen Bild bestimmt,
**dadurch gekennzeichnet, dass** der genannte Schritt folgende Teilschritte umfasst:

a) Berechnen einer Hauptfunktion, die repräsentativ ist für die Korrelationsverhältnisse zwischen den Daten des genannten ersten Satzes und des genannten zweiten Satzes, und
b) Bestimmen der genannten Überlagerungstransformation aufgrund der genannten berechneten Hauptfunktion.

**Claims**

1. Electronic data processing device, intended to receive first and second data sets representing similar first and second digital images, each data item comprising a position component and an intensity component, and comprising registration means (1) designed to determine, from these two data sets, a transformation for registration between one of the images and the other,
**characterized in that** the said registration means (1) comprise a first module (4) designed to calculate a main function representative of the correlation ratios between the data of the said first set and the data of the said second set, and a second module (5) designed to determine the said registration transformation from the said main function.

2. Device according to Claim 1, **characterized in that** the calculation of the said main function is carried out in a space provided with a chosen norm.

**3.** Device according to Claim 2, **characterized in that** the said space is a Hilbert space.

**4.** Device according to one of Claims 1 to 3, **characterized in that** the said registration means (1) comprise a third module (6) designed to estimate a conjoint probability density function from the said first and second data sets and **in that** the first module (4) is designed to calculate the said main function from the said conjoint probability density function.

**5.** Device according to Claim 4, **characterized in that** the calculation of the conjoint probability density function relates to the intensity components of the data of the said sets.

**6.** Device according to one of Claims 1 to 5, **characterized in that** it comprises means (2) for enabling the designation of one of the two images - called the first image - as "reference" image and the other image - called the second image - as "floating" image, in such a way that the said registration transformation is determined for the registration of the said floating image on the said reference image.

**7.** Device according to one of Claims 4 to 6, **characterized in that** it comprises a fourth module (7) designed to transform the said first data set into a third data set comprising data whose position components correspond to each of the position components of the data of the second set.

**8.** Device according to Claim 7, **characterized in that** the said transformation of the first data set comprises the application of an initialization registration transformation and an interpolation.

**9.** Device according to Claim 8, **characterized in that** the said interpolation is of the trilinear type.

**10.** Device according to one of Claims 1 to 9, **characterized in that** the said second module (5) is designed to choose a maximum value of the main function according to a chosen criterion and to determine the registration transformation from the said maximum value.

**11.** Device according to one of Claims 1 to 10, **characterized in that** the said registration transformations are determined within the ensemble of any n-dimensional geometric transformations, n being chosen from at least the values 2 and 3 depending on the dimension of the images.

**12.** Device according to Claim 11, **characterized in that** the said n-dimensional geometric transformations are determined within the ensemble of affine n-dimensional transformations, in particular those called "rigid" transformations.

**13.** Device according to one of Claims 8 to 12 in combination with Claim 4, **characterized in that** the said second module (5) is designed to determine whether the said registration transformation satisfies a chosen criterion, the registration transformation being addressed to the third module (6) in the event of the said criterion not being satisfied, so as to replace the said transformation used previously for obtaining the said third data set for the purpose of redetermining the registration transformation.

**14.** Device according to one of Claims 1 to 13, **characterized in that** the registration means (1) are designed to estimate the said main function from data of the said first and second sets satisfying a chosen criterion.

**15.** Device according to one of the preceding claims, **characterized in that** the similar digital images are medical images.

**16.** Device according to one of the preceding claims, **characterized in that** the first and second images derive from different acquisition techniques.

**17.** Method of processing two data sets representing similar first and second digital images respectively, which method comprises a step in which a transformation for registration between one of the images and the other is determined from the two data sets,
**characterized in that** the said step comprises the following substeps:

a) a main function representative of the correlation ratios between the data of the said first set and of the said second set is calculated; and

b) the said registration transformation is determined from the said calculated main function.

FIG.1

FIG. 2

FIG.3

FIG.4A

FIG.4B

FIG.4C

FIG.5A

FIG.5B